Europäisches Patentamt

European Patent Office

Office européen des brevets

(19)

(11) **EP 1 298 542 A2**

(12) **EUROPEAN PATENT APPLICATION**

(43) Date of publication:
**02.04.2003 Bulletin 2003/14**

(51) Int Cl.⁷: $G06F\ 17/30$

(21) Application number: **02021380.7**

(22) Date of filing: **24.09.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **26.09.2001 KR 2001059566**

(71) Applicant: **LG ELECTRONICS INC.
Seoul (KR)**

(72) Inventor: **Yoon, Kyoung Ro
Kangnam-gu, Seoul (KR)**

(74) Representative: **Vetter, Ewald Otto et al
Meissner, Bolte & Partner
Anwaltssozietät GbR
(Depotstrasse 5 1/2,
86199 Augsburg),
Postfach 10 26 05
86016 Augsburg (DE)**

(54) **Multimedia searching and browsing system based on user profile**

(57)     There are provided a multimedia searching and browsing system reflecting user preference or user pattern, and a user preference extracting method to provide a user-oriented multimedia service, which comprises the steps of recording the usage history for a consumed multimedia, and extracting the use types of a user for a consumed multimedia and the preference with respect to the use types based on the recorded user history.

FIG.1

**Description**

**BACKGROUND OF THE INVENTION**

1. Field of the invention

The present invention relates to a multimedia searching and browsing system, and more particularly, to a multimedia searching and browsing system reflecting user profile or user pattern.

2. Description of the Related Art

Recently, user-oriented multimedia services are introducing multimedia searching and browsing technologies which reflect user profile or multimedia use patterns of a user. The technologies enable a user to get the optimum user-oriented multimedia service, which are realized by recording data, such as how much he or she prefers a specific multimedia, or how often he or she uses one specific action type of various action types, etc., as a use record (user history), storing the item technology, which he or she prefers based on the above record, as a user profile information, and later, providing as user profile/use pattern for the user who is searching or browsing the multimedia. Particularly, with the recent beginning of digital broadcasting, there is introduced a multimedia searching and displaying method in which user profile is extracted by using a history information of the user, and the extracted user profile is reflected on the searching and displaying of the multimedia data.

As for the multimedia searching and browsing method reflecting user profile or use pattern,- there are conventionally introduced technologies, which operate in such a manner of recording the history about the number of the times that a user actually uses the multimedia (usage count), use amount, use time, or kinds of the multimedia, etc., and increasing/decreasing the user profile on a specific item based on the frequency of a corresponding information of the recorded history, etc. so as to maintain or update the user profile.

For example, there is also introduced a more intelligent displaying method in the searching and browsing system for moving images. When a user performs a replaying or a fast forward, etc., the action is recorded, and scores are given to user preference with respect to a segment of data. In this method, the user profile is recorded and used allowing different importance to each action as follows. In other words, since the segment in which the replaying action occurs more often is considered a more important segment, there may be provided a service to display the segment more slowly during searching the segment.

The above technology of reflecting user profile can be employed in various items, such as broadcasting channels which a user prefers, his or her favorite sound volume for each channel, genre of moving images program provided (action, drama, sports games, etc.), his or her favorite specific program (the name of the specific program frequently watched), etc.

In addition, there is introduced a kind of browser as one of the items reflecting user profile as above. When a user is browsing multimedia data, a browsing method which he or she prefers is contained in a user profile, and the information of his or her favorite browsing method in that profile is used and reflected for the browsing service.

There is also reported a technology using a portable storage device such as a smart card, etc., to supply a multimedia service reflecting user profile or use pattern by using user profile information in a more user-oriented manner, rather than a server or device-oriented one. In other words, since the user preference information is stored in a portable storage device such as smart card, a user-oriented service can be always constantly supplied regardless of the kinds of device (terminal) or server, or its location, etc.

Meanwhile, there are also provided more various user preference information structures and technologies of multimedia searching and browsing method in order to realize a more efficient multimedia searching and browsing based on user profile as above. For example, a user profile information is formed of a multiple hierarchical structure, and various levels of preference items are classified. Accordingly, the supply of a more detailed information is possible by the way of moving from a high level of preference to a lower level of preference, or a high level of preference for preference items is formed by using a lower level of preference.

The useful functions as above are realized mostly by the recorded history of the data from the use of a multimedia. That is, the data of multimedia use by a user is recorded, and the pattern or the style is numericalized to extract the profile information. As such, in case of recording the use pattern that the user uses the multimedia as a number, the overall record history from the start to the present time should be reflected. However, there is a restriction in reflecting the user history during a recent time, and expressing the preference as a specific number as follows.

First, the above method of storing the data of user preference requires an indefinite storage space because the history information is increased chronically, which is actually impossible. Therefore, the user history just during a predetermined time period is reflected to update the user preference, and the user history, which was reflected to update the user preference, should be deleted. Acccrdingly, the problem of a limited storage space is solved, and the more efficient operation at the storage space for user preference information is possible, as well as the establishment cf the user profile information based on the most recent user preference. That is, in the aspect of interests of the user, he or she had strong favors for video contents of 'action' genre in the past, but he or she now may have a stronger favor for video contents for 'drama' genre at present. Therefore, the information establishment for reflecting his or her new preference for the 'drama' genre is required, that is, for reflecting the preference change of the more frequent access to the 'drama' genre and accordingly, the multimedia searching and browsing system based on the user preference should actively comply with the above requirement.

Secondly, the establishment of the relation between the newly-accumulated history and the already-reflected history is a core point to constantly and efficiently update/maintain the preference, but the conventional technologies cannot give a sufficient consideration to the preference updating (just in a state of simply extracting preference, recording, and reflecting) or just involves the methods of increasing the grades of preference at a constant level at every occurrence. In addition, when expression range of preference is withir a constant interval, for example, a limited preference expression interval, such as from preference '100' corresponding to the most preference to preference '-100' corresponding to the most nonpreference, it cannot be used. Therefore, an extracting and updating method of user preference is required wherein preference is gradually updated at every occurrence of new record history so that the preference updating is actually user-oriented and user-dependant, and the preference updating actually reflects the user preference.

Thirdly, the reflection of preference should be varied with multimedia use types of the user, but there is no consideration for this requirement. For example, the parts of recording video contents, replaying at low speed, or replaying at high speed, etc. have different values of preference, and thus, just defining of the usage count simply to as preference does not actually reflect the user preference. That is, for example, the part of recording video is the one that the user is more interested in than the skipped part by replaying at high speed so that the preference of this part should be recorded with a higher value.

## Summary of the Invention

Accordingly, the present invention is directed to the methods of extracting and updating user preference, and a method of searching multimedia based on the user profile and a system thereof that substantially obviates one or more problems due to limitations and disadvantages of the related art.

An object of the present invention is to provide an improvement to a user profile extracting method based on user history of related arts, and also provide a method of extracting the preference in a limitedly represented range only by using newly accumulated history not by the history which is already reflected on the preference extracting. In addition, the present invention is to provide a method of extracting and updating preference, which is more user-oriented and more user-dependant by giving different weight value to the preference extracting and updating with respect to the use types of a user.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a user profile reflecting user preference as a history on use of a multimedia content.

The user profile according to the present invention includes a user preference information on the consumption of multimedia content, reflecting the recorded usage history (user history) and comprises of preference items and preference values. The usage history includes: a user action type information of describing the use types of the multimedia consumption; a multimedia content identification information of the consumed multimedia content to identify the consumed multimedia content;; and a multimedia object information for searching the consumed multimedia content corresponding to the usage history. The usage history can further include a segment locating information of the specific portion of the multimedia content consumed in a given action type.

In addition, a multimedia searching and browsing apparatus of the present invention comprises: a user profile including the user preference for searching and browsing of multimedia depending on the recorded usage history of the consumed multimedia content, and reflecting a different weight value with respect to the user action types performed on the consumed multimedia; preference information processing means for updating and storing the usage history of the user based on the user action types performed on the consumed multimedia content, and updating and storing user preference information with respect to the user action types performed on the consumption of the multimedia; and browsing means for performing a searching and browsing for the multimedia which the user accesses depending on the user profile by using the user preference information recorded in the user profile.

In addition, the present invention provides a user preference extracting method for providing a user-oriented multimedia service based on user preference for a consumed multimedia, which comprises steps of: recording a consumed history for the consumed multimedia; and extracting the user action types performed to consume the multimedia content, and the preference with respect to each preference item based on the use types of the multimedia recorded in the usage history.

In addition, a multimedia searching and browsing method based on user preference of the present invention comprises the steps of: searching and browsing the multimedia content based on the extracted or existing preference information; recording the usage history of the given user according to the multimedia searching, filtering and browsing actions, extracting the user action types performed for each consumed multimedia content, and storing the usage history with respect to the user action types; extracting the preference information by giving different weight values with respect to the user action types performed for consumption of each multimedia content which is stored in the usage history; and updating and storing the preference information for each preference item based on the extracted preference information.

It is to be understood that both the foregoing general description and the following detailed description of the present invention are exemplary and explanatory and are intended to provide further explanation of the invention as claimed.

**Brief Description of the Drawings**

The accompanying drawings, which are included to provide a further understanding of the invention and are incorporated in and constitute a part of this application, illustrate embodiment(s) of the invention and together with the description serve to explain the principle of the invention. In the drawings:

FIG. 1 illustrates one example of the multimedia system according to the present invention;
FIG. 2 illustrates one example of the user profile information structure according to the present invention;
FIG. 3 illustrates one example of a user preference value extracting function of the present invention to illustrate a method of extracting the user preference; and
FIG. 4 illustrates one example of a user preference value updating function of the present invention to illustrate a method of updating the user preference.

**Detailed Description of the Invention**

Reference will now be made in detail to the preferred embodiments of the present invention, examples of which are illustrated in the accompanying drawings. Wherever possible, the same reference numbers will be used throughout the drawings to refer to the same or like parts.

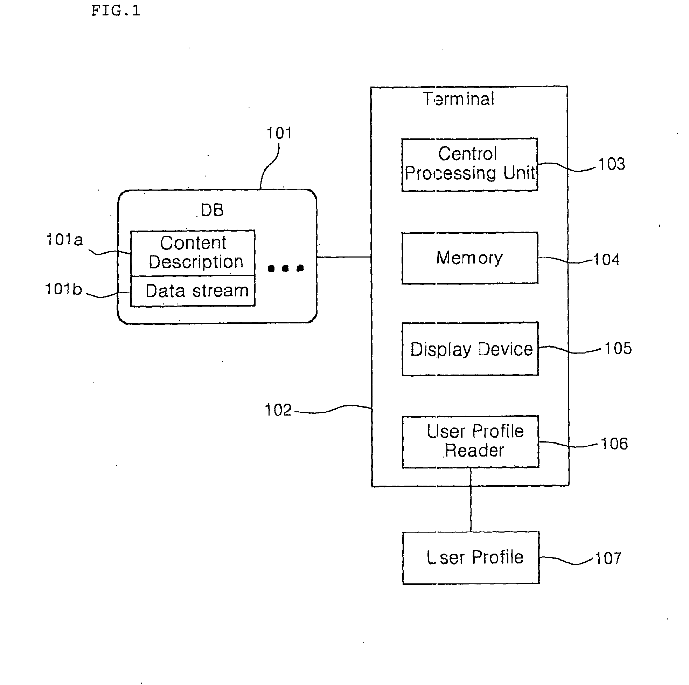

FIG. 1 is a block diagram of tile multimedia system according to the present invention. The extracting method of user preference, the updating method of user preference, the information structure of user preference, the multimedia searching and browsing method using the above, and the service system according to the present invention are not restricted to the representation shown in FIG. 1.

As shown in FIG. 1, a multimedia object 101 comprises a content description information 101a and a data stream 101b for indexing/browsing the multimedia based on its content. A terminal 102 comprises a central processing unit 103 for controlling of a searching and browsing based on content, a memory 104 for storing various data, a displaying unit 105 for displaying the all information related to the multimedia data searching and browsing, a user profile reader 106 for reading a user profile information, and a user profile 107.

The user profile reader 106 may have a writer function to update of the information described in the user profile 107. In addition, the user profile 107 may be a portable medium for writing and storing information like a smart card. The user profile 107 is stored in a server, or is stored in a device. The user profile 107 has a favorite item of a user (preference item) and the preference for the item recorded therein, and the record can be updated, and is read by the user profile reader 106 and downloaded into the memory 104.

The central processing unit 103 reads a user profile information downloaded into the memory 104 and determines preferred multimedia content according to the preference items and preference values in the user preference information. Then, the central processing unit 103 performs a searching and browsing based on the above, and displays the results on the displaying unit 105.

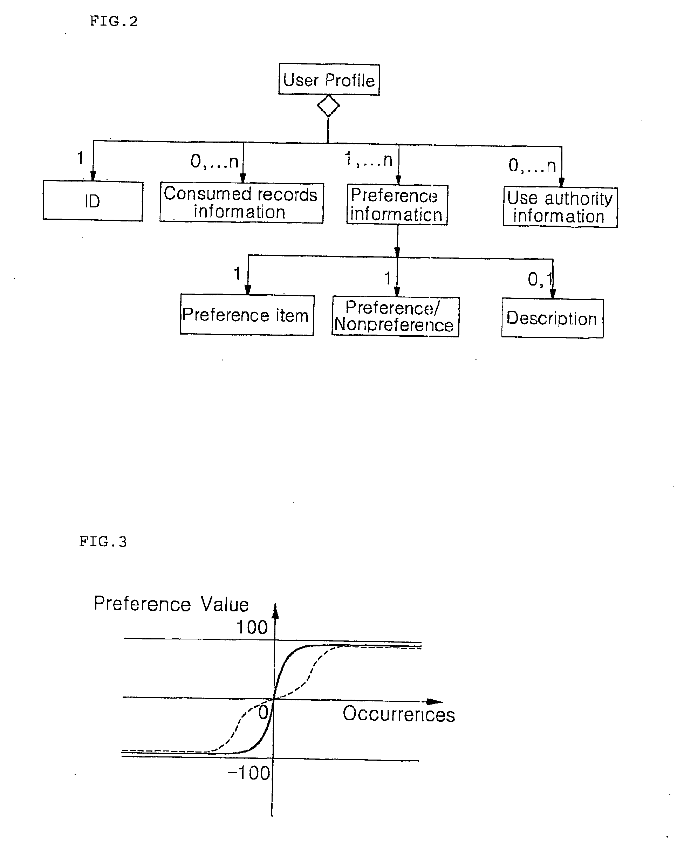

FIG. 2 schematically shows one example of the user profile information structure according to the present invention, but the figure shown in FIG. 2 is not meant to be limiting the user profile information structure of the present invention.

The user profile, that is, the user information structure contains information on user authentication or verification (which may be ID), consumed records information, preference information, use authority information, etc., and the preference information structure may have a preference item, preference and nonpreference, and the description there about.

The consumed record information may be the usage history, and the use authority information may be restrictions for the multimedia objects which a user can access. The preference items may be kinds of the multimedia objects, for example, genre of video (action, drama, documentary, etc.) or information describing the content of the multimedia content (title, actor/actress name, director, etc.) The usage history may be kept as a list of information on consumed multimedia content for each action type. Action types can be the types of user actions performed by a user while consuming a multimedia content, for example, recording, simple replaying, fast. forward, low speed replaying, etc.

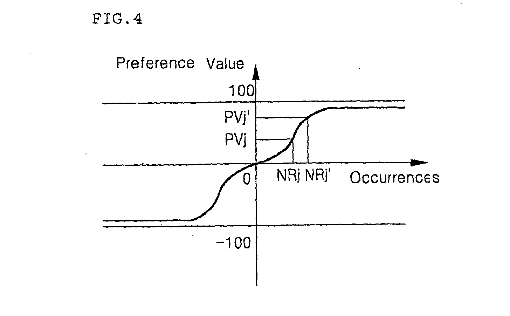

FIG. 3 is one example of a user preference value extracting function of the present invention to illustrate an extracting method of user preference. FIG. 4 is one example of a user preference value updating function of the present invention to illustrate an updating method of user preference.

Now hereinafter, the extracting and updating method of user preference, and searching and browsing methods of multimedia data based on user preference are illustrated in detail.

The preference information of a user is extracted by using the usage history. The usage history should store metadata related with multimedia content which the user consumed, or includes basically the information (for example, link information) to retrieve the metadata, and the user actions performed using the multimedia information consumed, etc. The series of the records can be represented by the user profile information structure of FIG. 2 as set forth before.

The usage history of the present invention contains action type, consumed program, consumed segment, related metadata or link to metadata. The extracting of the user preference using the above information can be performed by the central processing unit in FIG. 1.

The usage history extracting means, which can be a part of the user preference extracting means, extracts the action types performed using the multimedia content and information related to metadata to reflect it on user preference, or how often it is used, which can be extracted by recording and analyzing the occurrence of corresponding items when a user accesses and uses a specific multimedia object. For example, supposing that the user records moving image contents of video A and video B, if the video A and the video B are all related to the metadata of 'action' genre, the usage history extracting means can extract that the user used the action type of 'recording' two times for the preference item of 'action' genre. Also, if the user records a specific part (interval) only in the video, the extracting means can extract the preference for the metadata (recording interval information) corresponding to the detailed preference item for the part in the video by the same way.

To make it generalized, the action type, the preference item, and the usage count can be represented as $A_i$, $P_j$, and $C_{ij}$ respectively. That is, there comes out the records of using the multimedia information related to the preference item $P_j$ by using the action type $Ai$ by the usage count $C_{ij}$.

However, the method, such as just counting of the records as above, is not sufficient to reflect the actual user preference, which was set forth in the description of the related arts. Therefore, to extract the user preference exactly and virtually reflecting the preference information of a user, the preference should be extracted by providing different weight values with respect to action types.

To make a video content as an example various action types such as 'recording', 'simple replaying', 'low speed replaying', 'high speed replaying', 'fast forward', 'fast backward', etc. reflect interests of a user, but there is a large difference between the interests (preference). That is, 'recording' is an action type for the part which the user is more interested in than at least another action type, 'fast forward or backward'. Therefore, when considering a preference weight value of this example with respect to action types, if the 'simple replaying' represents an interest of amount '1', 'low speed replaying' represents an interest more than the amount '1' on the interval. 'High speed replaying' represents a negative interest for the interval. 'Fast forward' represents a more negative interest for the interval, and 'fast backward' represents a more positive interest for the skipped interval than 'simple replaying' for the replaying interval before skipping.

Therefore, a different method of extracting user preference with respect to user action types should be employed, and when considering the relations as above, the interests of a user can be expressed as mathematical formula 1 below.

$$【formula\ 1】$$
$$NRj = \sum_i WiCij$$

Here, $NRj$ means an adjusted usage count for a preference item $Pj$, and it is defined to as 'adjusted usage count for a preference item'. $Wi$ is a weight value for action type $Ai$. Accordingly, the weight value $Wi$ for action type *Ai*, which means a more interest, has a higher value than a weight value *Wk* for action type *Ak*, which means the less interest. In addition, a weight value *Wl* for action type *Al* of a negative interest has negative value (-). Therefore, the relations between the values, *Wi>Wk>0>Wl* is established

Described as above, if the adjusted usage count with respect to preference items, *NRj* is produced, user preference can be produced based on the adjusted usage count. In other words, if a start preference value, or an initial value for one preference item is '0', the highest value for positive preference is '100', and the lowest value for negative preference is '-100', a preference value *PVj* for the selected preference item *Pj* can be expressed as mathematical formula 2 below.

**【formula 2】**

$$PVj = 100\left(\frac{1 - \exp(-aNRj)}{1 + \exp(-aNRj)}\right)$$

The '*a*' represents a gradient of the curve at the user preference value extracting function. With the increase of the '*a*' at the preference function, it has a gradient of the curve represented as solid line, and with the decrease of the '*a*', it has a gradient of the curve represented as dotted line. That is, in the interval of a large '*a*', the preference value shows a large increase even with a small increase of the early-adjusted usage count, but if the usage count increases above a certain constant value, the preference value converges into a value, '100'. That is, in the interval of a small '*a*', the preference value shows a small increase until the usage count increases by a certain value, but if the usage count increases above a certain value, the preference value increases rapidly, and if increases above another certain value, the preference value converges into a value, '100'. In the case of negative preference, if the adjusted usage count has a negative (-) value, it converges into '-100' on the contrary. The selection of the '*a*' can be made with an appropriate value depending on the decision of an implementer.

As above, the extracting method of user preference using user action types and weight values with respect to the action types is explained. Now herein after, a user preference updating method will be described.

As user history may be a burden to a storage device if it is accumulated over a predetermined amount, it should be deleted after being reflected. In case that existing user preference values are extracted, an actual preference value (updated value) should be the value which is extracted by accumulating both of the user history used to extract the existing user preference value, and the user history newly-accumulated. That is, a new preference should be extracted by considering the usage history recorded in the existing user profile and the new usage history newly-established from the access to a multimedia object together.

By using the user preference extracting function used in Fig. 3, a new user preference extracting (updating) function (that is, updated preference value *PVj'*) can be represented as Fig. 4, and also expressed as mathematical formula 3 below.

**【formula 3】**

$$PVj' = 100\left(\frac{1 - \exp(-aNRj')}{1 + \exp(-aNRj')}\right)$$

$$= 100\left(\frac{1 - \exp(-a(NRj + dNRj))}{1 + \exp(-a(NRj + dNRj))}\right)$$

Here, *NRj'* is defined to be equal to *NRj+dNRj* (*NRj' = NRj+dNRj*), *dNRj* is an adjusted usage count for newly-accumulated preference item *Pj*, and *NRj* is an adjusted usage count which is already used to extract *PVj*. Therefore, based on existing preference value *PVj* and newly-accumulated adjusted usage count *dNRj*, updated preference value *PVj'* can be achieved by mathematical formula 4 below.

【formula 4】

$$PVj' = 100\left(1 - \frac{1 - \exp(v - a \times dNRj)}{1 + \exp(v - a \times dNRj)}\right)$$

$$(v = \frac{100 - PVJ}{100 + PVJ})$$

By the above preference updating function, the user preference value based on the usage history can be easily updated. That is, as the existing usage history information is reflected on the existing preference value, and by using a newly accumulated usage count and the existing preference value only, the user preference value equal to the result of using the all accumulated values can be counted. Also, the preference value can be updated gradually with respect to the accumulation of the user history.

In addition, even with the same adjusted usage count $NRj$, the user preference value counted over a long time period, and the user preference value counted over a short time period with respect to accumulated period may be different in the aspect of their frequency numbers. Also, their weight values may be different depending on the overall usage amount. Therefore, a newly-adjusted usage count $NNRj$ can be also used according to the overall usage count and accumulated period. As a simple example of $NNRj$, there is a newly-adjusted value in inverse proportion to the overall usage count and accumulated period.

Accordingly, the present invention provides a user to access multimedia contents service with a user-oriented multimedia service by automatically extracting and using the preference information of the user according to his or her individual contents usage types and his or her use types. Particularly, as the record (history) used to extract the user preference information can be deleted, the storage device can be efficiently used.

In addition, the present invention provides an improved extracting method depending on the use types for a specific multimedia by which the user wants to use, and the use types of the multimedia, rather than extracting of the preference information uniformly at a constant rate with respect to a usage count of multimedia like the conventional technologies. Therefore, it is possible to extract the user preference which is the more exact and the more user-oriented, and accordingly, with based on that, the optimum multimedia searching and browsing service depending on the needs of a user can be realized.

It will be apparent to those skilled in the art that various modifications and variations can be made in the present invention. Thus, it is intended that the present invention covers the modifications and variations of this invention provided they come within the scope of the appended claims and their equivalents.

**Claims**

1. A user profile including user preference information on the consumption of multimedia content, which comprises preference items and preference values, and reflects recorded usage history (user history), said usage history comprising:

   a user action type information of describing the use types of the multimedia consumption;
   a multimedia content identification information of the consumed multimedia content to identify the consumed multimedia content;and
   a multimedia object information for searching the consumed multimedia content corresponding to the usage history.

2. The user profile of claim 1, wherein the usage history further comprises a segment locating information of the specific portion of the multimedia content consumed in a given action type.

3. The user profile of claim 1 or 2, wherein the information on the consumed multimedia is recorded with different weight values with respect to the use types of the multimedia.

4. The profile of at least one of the preceding claims, wherein the multimedia object information comprises of metadata related to the consumed multimedia content or link to the metadata related to the consumed multimedia content.

**5.** A multimedia searching and browsing apparatus comprising:

a user profile including the user preference for multimedia searching and browsing, which comprises preference items and preference values, and usage history including a history of actions that consumers of multimedia content have carried out over a period of time;
a profiling agent extracting and updating user preference depending on the multimedia use types and using a different weight value with respect to the use types;
a usage history collecting means for updating and storing the history of actions that consumers of multimedia content have carried out over a period of time; and
a browsing means for performing a searching and browsing for the multimedia, which the user accesses, by using the user preference information recorded in the user profile.

**6.** A user preference extracting method for providing a user-oriented multimedia service based on user preference for a consumed multimedia, the method comprising the steps of:

a) recording a consumed history for the consumed multimedia; and
b) extracting the use types for the consumed multimedia, and the preference with respect to the use types of the multimedia based on the recorded user history.

**7.** The user preference extracting method of claim 6, wherein the user history is recorded with respect to the use types for the multimedia, and the history comprises metadata or direct/indirect link to metadata corresponding to preference items or its related information.

**8.** The user preference extracting method of claim 6 or 7, wherein the extracting of the user preference is based on the usage count with respect to the metadata corresponding to the preference items, and the usage count with respect to the metadata is defined to as

$$NRj = \sum_{i} WiCij \ ,$$

and is an adjusted usage count achieved by giving different weight values with respect to the use types of the multimedia stored into the user history.

**9.** The user preference extracting method of at least one of claims 6 to 8, wherein the extracting of the user preference is based on the usage count with respect to the metadata, and the user preference converges into the highest value or the lowest value with respect to the increase of the usage count in the positive (+) direction of the positive preference, or in the negative (-) direction of the negative preference (nonpreference) respectively.

**10.** The user preference extracting method of at least one of claims 6 to 9, wherein the user preference is extracted by using existing user preference values and an adjusted usage count based on newly accumulated history.

**11.** A multimedia searching and browsing method based on user preference, the method comprising the steps of:

a) extracting the multimedia use types information of a user, and the preference information recorded by giving different weight values with respect to the use types cf the multimedia;
b) searching and browsing the multimedia based on the extracted preference information;
c) recording the user history according to the multimedia searching and browsing; and
d) updating and storing the preference information based on the recorded user history.

**12.** The multimedia searching and browsing method of claim 11, wherein the user history is recorded with respect to the use types of a multimedia, and includes the metadata corresponding to preference items or its related information, and thus, the searching and browsing is performed for the multimedia, the use types of the multimedia, or the multimedia segment corresponding to the preference items based on the metadata and its related information.

**13.** The multimedia searching and browsing method of claim 11 or 12, wherein the user history used to extract the preference based on the user history is deleted after extracting the preference.

**14.** The multimedia searching and browsing method of at least one of claims 11 to 13, wherein the extracting of the user preference is based on the usage count with respect to the metadata, and the user preference converges into the highest value or the lowest value with respect to the increase of the usage count in the positive (+) direction of the positive preference, or in the negative (-) direction of the negative preference (nonpreference) respectively.

**15.** The multimedia searching and browsing method of claim 14, wherein the usage count with respect to the metadata is defined to as

$$NRj = \alpha \sum_i WiCij \, ,$$

and the $\alpha$ is a variable in inverse proportion to the consumed record accumulated period.

FIG.1

FIG.2

```
                          ┌──────────────┐
                          │ User Profile │
                          └──────┬───────┘
                                 ◇
         ┌───────────┬───────────┴───────────┬─────────────┐
        1│         0,…n│                  1,…n│          0,…n│
    ┌────▼────┐  ┌──────▼────────┐  ┌────────▼────┐  ┌───────▼──────┐
    │   ID    │  │Consumed records│ │  Preference │  │Use authority │
    └─────────┘  │  information   │  │ information │  │ information   │
                 └───────────────┘  └──────┬──────┘  └──────────────┘
                           ┌───────────────┼───────────────┐
                          1│              1│            0,1│
                    ┌──────▼──────┐ ┌──────▼──────┐ ┌──────▼──────┐
                    │Preference item│ │ Preference/ │ │ Description │
                    └─────────────┘ │Nonpreference│ └─────────────┘
                                    └─────────────┘
```

FIG.3

Preference Value

100

0   Occurrences

−100

FIG.4